# EUROPEAN PATENT APPLICATION

(11) **EP 4 410 439 A1**
(43) Date of publication of application: **07.08.2024**
(21) Application number: 23769734.7
(22) Date of filing: 14.03.2023
(51) Int. Cl.: B05C 5/02, H01M 4/04

(54) **COATING DIE HEAD, AND COATING DEVICE FOR BATTERY ELECTRODE PLATE**

(30) Priority: 14.03.2022 CN 202220553703 U
(71) Applicant: Contemporary Amperex Technology Co., Limited, Ningde, Fujian 352100 (CN)
(72) Inventor: YANG, Guozhong, Ningde, Fujian 352100 (CN); SUN, Xiangli, Ningde, Fujian 352100 (CN); LI, Fengdan, Ningde, Fujian 352100 (CN); WU, Xiaoping, Ningde, Fujian 352100 (CN); YANG, Chao, Ningde, Fujian 352100 (CN)
(74) Representative: Behr, Wolfgang
(86) International application number: PCT/CN2023/081217
(87) International publication number: WO 2023/174232

(57) **Abstract**

A coating die and a coating device of a battery electrode plate are provided by the present application. The coating die is configured to apply a slurry onto a base material. The coating die includes a feed inlet, a distributary channel, a first confluence chamber and a discharge outlet. The feed inlet is configured to inject the slurry. The distributary channel is provided inside the coating die. The distributary channel includes a first flow channel and a plurality of second flow channels. The first flow channel communicates the feed inlet with the plurality of second flow channels, and the plurality of second flow channels is provided to be spaced from one another in a first direction. The first confluence chamber is provided inside the coating die and communicated with the plurality of second flow channels to collect the slurry from the plurality of second flow channels. The discharge outlet is communicated with the first confluence chamber and configured to apply the slurry flowing through the distributary channel and the first confluence chamber onto the base material.

## Description

### CROSS REFERENCE TO RELATED APPLICATION

This application claims priority to Chinese Patent Application No. 202220553703.7, titled "COATING DIE AND COATING DEVICE OF BATTERY ELECTRODE PLATE" and filed on March 14, 2022, which is hereby incorporated by reference in its entirety.

### TECHNICAL FIELD

The present application relates to the technical field of coating, and in particular to a coating die and a coating device of a battery electrode plate.

### BACKGROUND

Coating is an essential process in the battery production, and a crucial process that directly affects the safety, capacity, lifespan and other performances of batteries. The coating is a process that a preparative paste-like viscous slurry is applied on a base material (aluminum foil or copper foil) evenly, continuously or intermittently.

During a coating process, how to ensure the consistency in thickness throughout the coating place is always a research direction in the field.

### SUMMARY

The present application provides a coating die and a coating device of a battery electrode plate, which can improve the consistency in coating thickness.

In a first aspect, some embodiments of the present application provide a coating die for applying a slurry onto a base material. The coating die includes a feed inlet, a distributary channel, a first confluence chamber and a discharge outlet. The feed inlet is configured to inject the slurry. The distributary channel is provided inside the coating die. The distributary channel includes a first flow channel and a plurality of second flow channels. The first flow channel communicates the feed inlet with the plurality of second flow channels, and the plurality of second flow channels is provided to be spaced from one another in a first direction. The first confluence chamber is provided inside the coating die and communicated with the plurality of second flow channels to collect the slurry from the plurality of second flow channels. The discharge outlet is communicated with the first confluence chamber and configured to apply the slurry flowing through the distributary channel and the first confluence chamber onto the base material.

In the above technical solution, after the slurry enters into the distributary channel through the feed inlet, the plurality of second flow channels can disperse the slurry to reduce the pressure difference of the slurry among the second flow channels and improve the uniformity of the pressure of the slurry. The first confluence chamber can collect the slurry from the plurality of second flow channels to achieve the effect of the buffering and uniform pressure, so as to allow the slurry to flow out evenly from the discharge outlet and improve the consistency in coating thickness.

In some embodiments, the distributary channel further includes a plurality of third flow channels, each of the second flow channels is communicated with the first confluence chamber through at least two third flow channels.

In the above technical solution, the slurry in each of second flow channels can be further dispersed through at least two third flow channels to improve the uniformity of the pressure of the slurry.

In some embodiments, the plurality of third flow channels are evenly spaced from one another in the first direction.

In the above technical solution, by arranging the plurality of third flow channels evenly spaced from one another in the first direction, the slurry in the plurality of third flow channels can evenly converge into the first confluence chamber, so as to reduce the pressure difference in different regions of the first confluence chamber in the first direction and improve the pressure uniformity effect of the first confluence chamber.

In some embodiments, the coating die includes a plurality of distributary channels provided in the first direction.

In the above technical solution, the plurality of distributary channels can be used to disperse the slurry and uniform the pressure of the slurry, so as to improve the consistency in coating thickness.

In some embodiments, the coating die includes a plurality of feed inlets, which are communicated with the first flow channels of the distributary channels, respectively.

In the above technical solution, the coating die can activate the corresponding feed inlets and the distributary channels as needed, which has good applicability.

In some embodiments, the coating die further includes a second confluence chamber and a turbulent channel. The second confluence chamber is provided between the first confluence chamber and the discharge outlet and communicated with the discharge outlet. The turbulent channel communicates the first confluence chamber with the second confluence chamber and is configured to disperse the slurry passing through the turbulent channel.

In the above technical solution, the turbulent channel can disrupt the slurry flowing out from the first confluence chamber to disperse the slurry and achieve the pressure uniformity of the slurry. The second confluence chamber can collect the slurry passing through the turbulent channel to achieve the effects of the buffering and uniform pressure, so as to allow the slurry to flow out evenly from the discharge outlet and improve the consistency in coating thickness.

In some embodiments, the first confluence chamber and second confluence chamber are provided in a second direction, and the first direction intersects with the second direction. The coating die includes a plurality of blocking columns spaced from one another in the second direction, each of the blocking columns includes a plurality of blocking blocks spaced from one another in the first direction, and the plurality of blocking blocks of two adjacent blocking columns are misaligned with each other in the first direction. The turbulent channel includes a plurality of gaps formed between the plurality of blocking blocks of the plurality of blocking columns.

In the above technical solution, due to the plurality of blocking blocks of two adjacent blocking columns being misaligned with each other in the first direction, in the two adjacent blocking columns, the blocking column far from the first confluence chamber may block the slurry passing through the other blocking column near the first confluence chamber, thereby changing the flow direction of the slurry and achieving the turbulent flow of the slurry.

In some embodiments, the coating die includes a first die, a second die and a gasket. The first die and the second die are arranged opposite to each other in a third direction, and the gasket is arranged between the first die and the second die to form the discharge outlet between the first die and the second die. The feed inlet is arranged in the first die or the second die.

In some embodiments, the first die includes a first surface facing the second die, and the distributary channel and the first confluence chamber are recessed from the first surface in a direction away from the second die. The gasket is attached to the first surface and covers at least a portion of the distributary channel.

In the above technical solution, the gasket can seal the distributary channel from a side to reduce the risk of slurry overflow and mixing in the distributary channel, and improve the effect of the buffering and uniform pressure of the distributary channel.

In some embodiments, a depth of the first confluence chamber is larger than a depth of the distributary channel in the third direction.

In the above technical solution, the first confluence chamber has a larger depth, which can accommodate more slurry, thereby achieving the effects of buffering and uniformity of the slurry.

In some embodiments, the first die includes a first main body and a first flow-rectifying block, a concave part is provided on a surface of the first main body facing the second die, and the first flow-rectifying block is mounted in the concave part. The distributary channel and first confluence chamber are arranged in the first flow-rectifying block, and the discharge outlet is provided between the first main body and the second die.

In the above technical solution, the first die can be equipped with the plurality of first flow-rectifying blocks, and the plurality of first flow-rectifying blocks can be provided with the distributary channels and first confluence chambers with different sizes, respectively. When the coating demand changes, the first flow-rectifying block can be replaced directly without adjusting other structures of the first die, which can improve the applicability of the coating die and improve the coating efficiency.

In some embodiments, the first die includes a first surface facing the second die, and the first confluence chamber is recessed from the first surface in a direction away from the second die. The distributary channel and the feed inlet are provided in the second die.

In some embodiments, the first confluence chamber and the distributary channel are provided in the third direction.

In the above technical solution, the total size of the first confluence chamber and the distributary channel in the second direction can be reduced, so as to reduce the space occupied by the coating die.

In some embodiments, the second die induces a second main body and a second flow-rectifying block, the second main body is provided with a mounting hole, and the second flow-rectifying block is inserted into the mounting hole and exposed to an outside of the second main body. The distributary channel and the feed inlet are provided in the second flow-rectifying block. The discharge outlet is provided between the first die and the second main body.

In the above technical solution, the second die may be equipped with the plurality of second flow-rectifying blocks, which are provided with the distributary channels with different sizes. When the coating demand changes, the second flow-rectifying block can be replaced directly without adjusting other structures of the second die, which can improve the applicability of the coating die. In the process of replacing the second flow-rectifying block, the second flow-rectifying block can be disassembled or assembled from the outside to the second main body without separating the first die from the second main body, which can improve the replacement efficiency of the second flow-rectifying block.

In some embodiments, the second flow-rectifying block includes a first plate body and a second plate body stacked from an outside to an inside. The feed inlet is provided in the first plate body, and the first flow channel is recessed from a surface of the first plate body facing the second plate body. The plurality of second flow channels are provided in the second plate body.

In the above technical solution, the first plate body only needs to be provided with the feed inlet and the first flow channel, and the second plate body only needs to be provided with the second flow channel, so that the difficulty of forming the first plate body and the second plate body can be reduced. By stacking the first plate body and second plate body, the communication between the first flow channel and the second flow channel can be achieved. The technical solution can simplify the forming process of the second flow-rectifying block.

In some embodiments, the second plate body is detachably connected to the first plate body.

In the above technical solution, when the coating demand changes, the second plate body of the second flow-rectifying block can be replaced to improve the applicability of the second flow-rectifying block.

In some embodiments, the second flow-rectifying block further includes a third plate body, which is provided on a side of the second plate body away from the first plate body. The third plate body is provided with a plurality of third flow channels, and each of the second flow channels is communicated with the first confluence chamber through at least two third flow channels.

In the above technical solution, the third plate body can further disperse the slurry by providing the third flow channels to improve the uniformity of the pressure of the slurry.

In some embodiments, the second main body is provided with a support wall, which is located between the first confluence chamber and the mounting hole and is configured to support the second flow-rectifying block. The support wall is provided with a plurality of through holes, and each of the second flow channels is communicated with the first confluence chamber through at least two through holes.

In the above technical solution, the support wall can support the second flow-rectifying block, so as to facilitate the mounting of the second flow-rectifying block and reduce the risk of excessive insertion of the second flow-rectifying block into the second main body. The plurality of through-holes can disperse the slurry to improve the uniformity of the pressure of the slurry.

In a second aspect, some embodiments of the present application provide a coating device of a battery electrode plate, including the coating die according to any one of the embodiments in the first aspect.

In the above technical scheme, the coating device can improve the consistency of the thickness of the electrode plate and enhance the performance of a battery.

### BRIEF DESCRIPTION OF THE DRAWINGS

The features, advantages and technical effects of exemplary embodiments of the present application will be described below with reference to the drawings.
Fig. 1 shows a structural schematic view of a coating die according to some embodiments of the present application;
Fig. 2 shows an exploded schematic view of the coating die shown in Fig. 1;
Fig. 3 shows a cross-sectional schematic view of the coating die shown in Fig. 1;
Fig. 4 shows a structural schematic view of a first die shown in Fig. 1;
Fig. 5 shows an enlarged schematic view of the first die at round frame A in Fig. 4;
Fig. 6 shows an enlarged schematic view of the first die at round frame B in Fig. 4;
Fig. 7 shows a structural schematic view of a first die of a coating die according to some embodiments of the present application;
Fig. 8 shows an exploded schematic view of the first die shown in Fig. 7;
Fig. 9 shows a structural schematic view of a coating die according to some other embodiments of the present application;
Fig. 10 shows a structural schematic view of a first die shown in Fig. 9;
Fig. 11 shows a structural schematic view of a second main body of a second die shown in Fig. 9;
Fig. 12 shows a cross-sectional structural schematic view of a second flow-rectifying block shown in Fig. 9;
Fig. 13 shows a cross-sectional schematic view of the coating die shown in Fig. 9; and
Fig. 14 shows a structural schematic view of a coating device of a battery electrode plate according to some embodiments of the present application.

### DETAILED DESCRIPTION

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a part of the embodiments of the present application, and not all of them. Based on the described embodiments of the present application, all other embodiments obtained by those skilled in the art fall within the scope of the application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, length, width and other dimensions of the various components in the embodiments of the present application shown in the drawings, as well as the overall thickness, length and width, etc., of the integrated device are only exemplary descriptions, and should not constitute any limitation to the present application.

The "plurality of" in the present application refers to two or more (including two). Similarly, "plurality of groups" refer to two or more groups (including two groups).

The term "parallel" in the present application not only includes an absolute parallelism situation, but also a general parallelism situation recognized in engineering; in addition, the term "vertical" not only includes an absolute vertical situation, but also a general vertical situation recognized in engineering.

Coating is a process of applying a coating material in a form of liquid or powder onto a surface of an object such as the fabric, paper, metal foil or board to form a thin layer. The coating is an indispensable step in a process of manufacturing a battery cell.

The battery cell includes an electrode assembly and an electrolyte, and the electrode assembly includes a positive electrode plate, a negative electrode sheet and a separator. The battery cell mainly relies on the movement of metal ions between the positive electrode plate and the negative electrode sheet to work. The positive electrode plate includes a positive electrode current collector and a positive electrode active material layer applied on the surface of the positive electrode current collector. The positive electrode current collector includes a positive electrode current collecting portion and a positive electrode tab. The positive electrode current collecting portion is coated with the positive electrode active material layer, and the positive electrode tab is not coated with the positive electrode active material layer. Taking a lithium ion battery as an example, the material of the positive electrode current collector may be aluminum, and the positive electrode active material layer includes a positive electrode active material, which may be lithium cobaltate, lithium iron phosphate, ternary lithium, lithium manganite or the like. The negative electrode sheet includes a negative electrode current collector and a negative electrode active material layer applied on the surface of the negative electrode current collector. The negative electrode current collector includes a negative electrode current collecting portion and a negative electrode tab. The negative electrode current collecting portion is coated with the negative electrode active material layer, and the negative electrode tab is not coated with the negative electrode active material layer. The material of the negative electrode current collector may be copper, and the negative electrode active material layer includes a negative electrode active material, which may be carbon, silicon or the like. The material of the separator may be PP (polypropylene), PE (polyethylene) or the like.

In the process of manufacturing the battery cell, both the positive electrode plate and the negative electrode plate are manufactured by means of a coating process. Exemplarily, the positive electrode active material, the conductive agent, the adhesive and the solvent are mixed to form the paste-like viscous slurry, which is then evenly, continuously or intermittently applied onto a base material (such as aluminum foil) to make the positive electrode plate. During coating, it is necessary to ensure the consistency of thickness at each coating position and control the coating thickness within the tolerance range required by the process.

A coating die used in the coating process includes a feed inlet, a discharge outlet and a channel communicating the feed inlet with the discharge outlet. The external slurry enters into the channel through the feed inlet under a certain pressure and flows out through the discharge outlet to be applied on the base material passing through the discharge outlet. However, due to the flow characteristics of the slurry itself, when the coating die has a large width, it often leads to uneven discharge, which may result in inconsistent distribution thickness of the slurry on the base material. During using the battery cell, the distribution thickness of the positive electrode active material layer on the positive electrode current collector and the distribution thickness of the negative electrode active material layer on the negative electrode current collector directly affect the safety, capacity, service life and other performance of the battery cell. Therefore, it is necessary to control the coating thickness of the slurry on the base material within a certain tolerance range to improve the various performance of the battery cell.

In order to improve the consistency of the coating thickness, the inventor attempted to improve the processing accuracy of the coating die. However, the processing accuracy of the coating die has reached a high level, and it is difficult to make further improvements due to the process limitation.

After researching, the inventor found that the slurry flows freely after flowing into the coating die through the feed inlet. A portion of the slurry near the feed inlet has a higher pressure, and a portion of the slurry far from the feed inlet has a lower pressure. This situation leads to the uneven pressure of the slurry during the flow process, which easily leads to the pressure concentration and the consistency of the coating thickness not meeting the expected requirements.

In view of this, some embodiments of the present application provide a coating die, which is provided with a distributary channel between the feed inlet and the discharge outlet to disperse the slurry inside the coating die, so as to uniform the pressure of the slurry and improve the consistency of the coating thickness.

The coating die provided by the embodiments of the present application can be used for, but is not limited to, the production of the electrode plate, and can also be used for the production of other workpieces that needs the coating process.

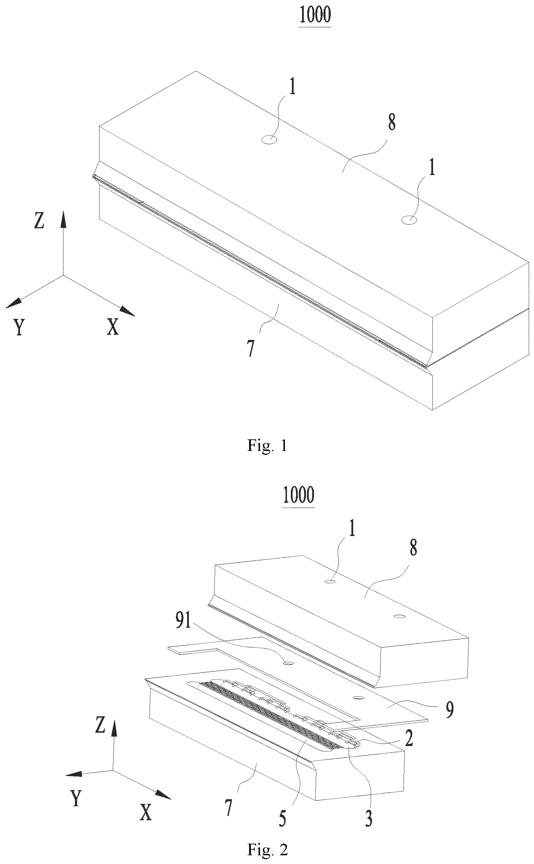

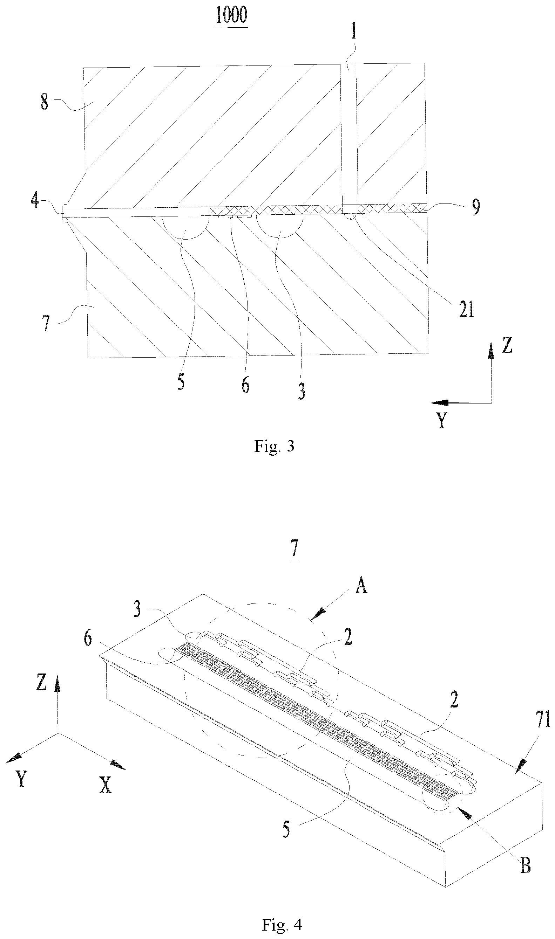

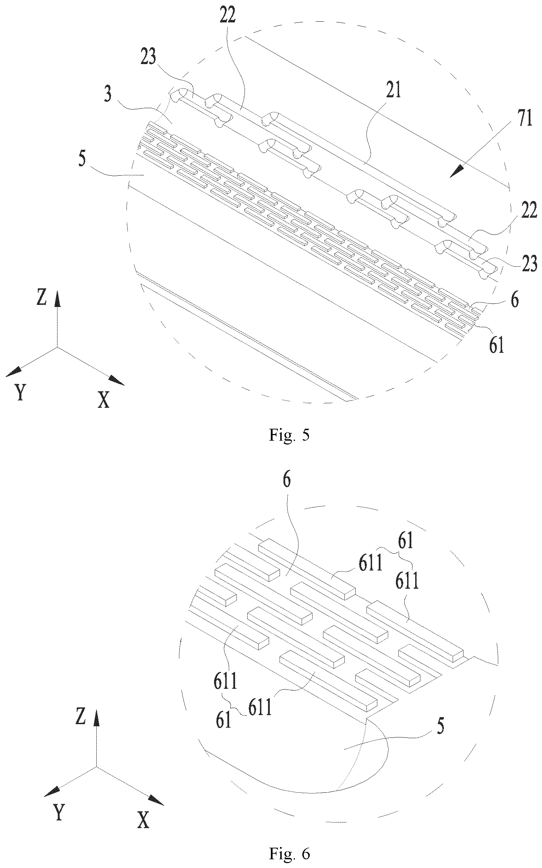

Fig. 1 shows a structural schematic view of a coating die according to some embodiments of the present application; Fig. 2 shows an exploded schematic view of the coating die shown in Fig. 1; Fig. 3 shows a cross-sectional schematic view of the coating die shown in Fig. 1; Fig. 4 shows a structural schematic view of a first die shown in Fig. 1; Fig. 5 shows an enlarged schematic view of the first die at round frame A in Fig. 4; Fig. 6 shows an enlarged schematic view of the first die at round frame B in Fig. 4.

As shown in Fig. 1 to Fig. 6, a coating die 1000 provided by the embodiments of the present application is configured to apply a slurry onto a base material. The coating die 1000 includes a feed inlet 1, a distributary channel 2, a first confluence chamber 3 and a discharge outlet 4. The feed inlet 1 is configured to inject the slurry. The distributary channel 2 is provided inside the coating die 1000. The distributary channel 2 includes a first flow channel 21 and a plurality of second flow channels 22. The first flow channel 21 communicates the feed inlet 1 with the plurality of second flow channels 22, and the plurality of second flow channels 22 is provided to be spaced from one another in a first direction X. The first confluence chamber 3 is provided inside the coating die 1000 and communicated with the plurality of second flow channels 22 to collect the slurry from the plurality of second flow channels 22. The discharge outlet 4 is communicated with the first confluence chamber 3 and configured to apply the slurry flowing through the distributary channel 2 and the first confluence chamber 3 onto the base material.

The base material may be a strip-like structure, which passes through the discharge outlet 4 of the coating die 1000. The slurry passes through the feed inlet 1, the distributary channel 2, the first confluence chamber 3 and the discharge outlet 4 in sequence under the pressure, and is sprayed onto a surface of the base material. The slurry applied onto the surface of the base material forms a coating layer.

Exemplarily, the base material may be a metal foil. The slurry includes the active substance, adhesive, conductive agent and solvent. Optionally, the active substance may be the positive electrode active substance or the negative electrode active substance.

The feed inlet 1 is used to communicate with an external feed device. The feed device can inject the slurry into the feed inlet 1 under a certain pressure. There may be one or more feed inlet 1, and this embodiment does not limit it.

In this embodiment, the communication may be the direct communication or indirect communication through another communicating structure. For example, the first flow channel 21 can be directly communicated with the feed inlet 1, or indirectly communicated with the feed inlet 1 through another communicating structure.

In this embodiment, there may be one or more the distributary channels 2.

The discharge outlet 4 can be as an outlet for the slurry, which is used to control the width and thickness of the coating layer formed by coating.

In this embodiment, after the slurry enters into the distributary channel 2 through the feed inlet 1, the plurality of second flow channels 22 can disperse the slurry to reduce the pressure difference of the slurry among the second flow channels 22 and improve the uniformity of the pressure of the slurry. The first confluence chamber 3 can collect the slurry from the plurality of second flow channels 22 to achieve the effect of the buffering and uniform pressure, so as to allow the slurry to flow out evenly from the discharge outlet 4 and improve the consistency in coating thickness.

In some embodiments, the distributary channel 2 further includes a plurality of third flow channels 3, each of the second flow channels 22 is communicated with the first confluence chamber 3 through at least two third flow channels 23.

In this embodiment, the slurry in each of second flow channels 22 can be further dispersed through at least two third flow channels 23 to improve the uniformity of the pressure of the slurry.

The second flow channels 22 of the distributary channel 2 can perform a first stage distributary to the slurry, and the third flow channels 23 can perform a second stage distributary to the slurry. The distributary channel 2 can perform a multi-stage distributary to the slurry to achieve the uniform flow and pressure.

In some embodiments, the plurality of third flow channels 23 are evenly spaced from one another in the first direction X.

In this embodiment, by arranging the plurality of third flow channels 23 evenly spaced from one another in the first direction X, the slurry in the plurality of third flow channels 23 can evenly converge into the first confluence chamber 3, so as to reduce the pressure difference in different regions of the first confluence chamber 3 in the first direction X and improve the pressure uniformity effect of the first confluence chamber 3.

In some embodiments, the coating die includes a plurality of distributary channels 2 provided in the first direction X.

In this embodiment, the plurality of distributary channels 2 can be used to disperse the slurry and uniform the pressure of the slurry, so as to improve the consistency in coating thickness.

In some embodiments, the plurality of distributary channels 2 are communicated with the same first confluence chamber 3.

The coating die includes two distributary channels 2, which are provided in the first direction X.

In some embodiments, the coating die includes a plurality of feed inlets 1, which are communicated with the corresponding first flow channels 21 of the distributary channels 2. Exemplarily, the feed inlets 1 correspond to the distributary channels 2, respectively.

In this embodiment, the coating die 1000 can activate the corresponding feed inlets 1 and the distributary channels 2 as needed, which has good applicability.

In some embodiments, the coating die 1000 further includes a second confluence chamber 5 and a turbulent channel 6. The second confluence chamber 5 is provided between the first confluence chamber 3 and the discharge outlet 4 and communicated with the discharge outlet 4. The turbulent channel 6 communicates the first confluence chamber 3 with the second confluence chamber 5 and is configured to disperse the slurry passing through the turbulent channel 6.

In this embodiment, the turbulent channel 6 can disrupt the slurry flowing out from the first confluence chamber 3 to disperse the slurry and achieve the pressure uniformity of the slurry. The second confluence chamber 5 can collect the slurry passing through the turbulent channel 6 to achieve the effects of the buffering and uniform pressure, so as to allow the slurry to flow out evenly from the discharge outlet 4 and improve the consistency in coating thickness.

In some embodiments, the first confluence chamber 3 and second confluence chamber 5 are provided in a second direction Y, and the first direction X intersects with the second direction Y The coating die 1000 includes a plurality of blocking columns 61 spaced from one another in the second direction Y, each of the blocking columns 61 includes a plurality of blocking blocks 611 spaced from one another in the first direction X. The plurality of blocking blocks 611 of two adjacent blocking columns 61 are misaligned with each other in the first direction X. The turbulent channel 6 includes a plurality of gaps formed between the plurality of blocking blocks 611 of the plurality of blocking columns 61.

The turbulent channel 6 includes gaps between the adjacent blocking columns 61 and the gaps between the adjacent blocking blocks 611 in each of the blocking columns 61.

In this embodiment, due to the plurality of blocking blocks 611 of two adjacent blocking columns 61 being misaligned with each other in the first direction X, in the two adjacent blocking columns 61, the blocking column 61 far from the first confluence chamber 3 may block the slurry passing through the other blocking column 61 near the first confluence chamber 3, thereby changing the flow direction of the slurry and achieving the turbulent flow of the slurry.

In some embodiments, in two adjacent blocking columns 61, the gaps between the adjacent blocking blocks 611 in one blocking column 61 and the blocking blocks 611 of the other adjacent blocking column 61 at least partially overlap with each other in the second direction Y

In some embodiments, the first direction X is perpendicular to the second direction Y.

In some embodiments, the coating die 1000 includes a first die 7, a second die 8 and a gasket 9. The first die 7 and the second die 8 are arranged opposite to each other in a third direction Z, and the gasket 9 is arranged between the first die 7 and the second die 8 to form the discharge outlet 4 between the first die 7 and the second die 8. The feed inlet 1 is arranged in the first die 7 or the second die 8.

The first die 7 is connected to the second die 8. Exemplarily, the first die 7 and the second die 8 can be connected by connection with fastening member, clamping or other means.

The gasket 9 is used to separate the first die 7 and the second die 8 to form a slit between the first die 7 and the second die 8, which can be used as the discharge outlet 4.

The feed inlet 1 can only be provided at the first die 7, or only be provided at the second the second die 8, or be provided at both the first die 7 and the second die 8.

In some embodiments, the first die 7 is located at a lower side of the second die 8. In this case, the first die 7 can also be called as a lower die, and the second die 8 can also be called as an upper die.

In some embodiments, the first die 7 includes a first surface 71 facing the second die 8, and the distributary channel 2 and the first confluence chamber 3 are recessed from the first surface 71 in a direction away from the second die 8. The gasket 9 is attached to the first surface 71 and covers at least a portion of the distributary channel 2.

In this embodiment, the gasket 9 can seal the distributary channel 2 from a side to reduce the risk of slurry overflow and mixing in the distributary channel 2, and improve the effect of the buffering and uniform pressure of the distributary channel 2.

In some embodiments, the gasket 9 is provided with an avoidance hole 91, which is located between the first flow channel 21 and the feed inlet 1 and communicate the first flow channel 21 with the feed inlet 1.

In some embodiments, the gasket 9 also covers the turbulent channel 6 to reduce the risk of the slurry overflow and mixing in turbulent channel 6, so as to improve the effect of turbulent channel 6 on the slurry turbulence and pressure uniformity.

In some embodiments, the gasket 9 also covers the first confluence chamber 3.

In some embodiments, the first surface 71 is a flat surface and the gasket 9 is a flat plate structure.

In some embodiments, a depth of the first confluence chamber 3 is larger than a depth of the distributary channel 2 in the third direction Z.

In this embodiment, the first confluence chamber 3 has the larger depth, which can accommodate more slurry, thereby achieving the effects of buffering and uniformity of the slurry.

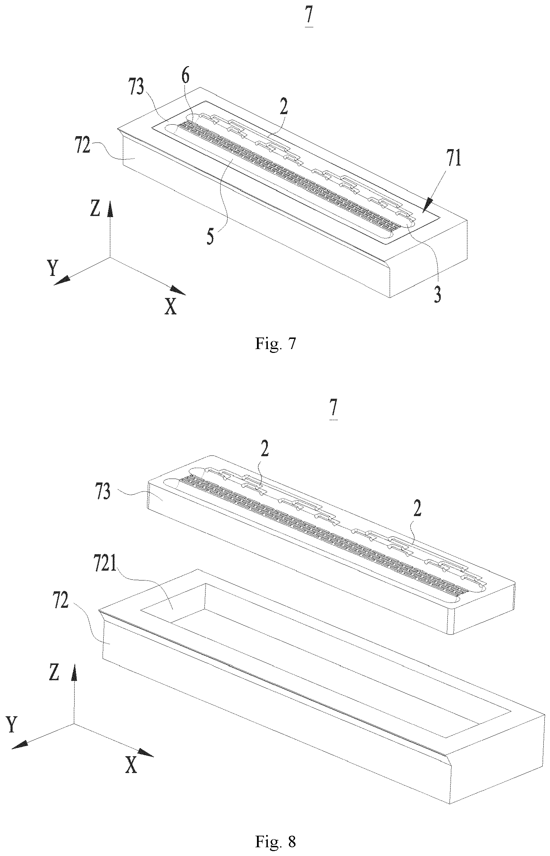

Fig. 7 shows a structural schematic view of a first die of a coating die according to some embodiments of the present application; Fig. 8 shows an exploded schematic view of the first die shown in Fig. 7.

As shown in Fig. 7 and Fig. 8, in some embodiments, the first die 7 includes a first main body 72 and a first flow-rectifying block 73, a concave part 721 is provided on a surface of the first main body 72 facing the second die 8, and the first flow-rectifying block 73 is mounted in the concave part 721. The distributary channel 2 and first confluence chamber 3 are arranged in the first flow-rectifying block 73, and the discharge outlet 4 is provided between the first main body 72 and the second die 8.

In this embodiment, the first die 7 can be equipped with the plurality of first flow-rectifying blocks 73, and the plurality of first flow-rectifying blocks 73 can be provided with the distributary channels 2 with different sizes. When the coating demand changes, the first flow-rectifying block 73 can be replaced directly without adjusting other structures of the first die 7, which can improve the applicability of the coating die 1000 and improve the coating efficiency.

In some embodiments, the first surface 71 includes a surface of the first main body 72 facing the second die 8 and a surface of the first flow-rectifying block 73 facing the second die 8. The surface of the first main body 72 facing the second die 8 is flush with the surface of the first flow-rectifying block 73 facing the second die 8.

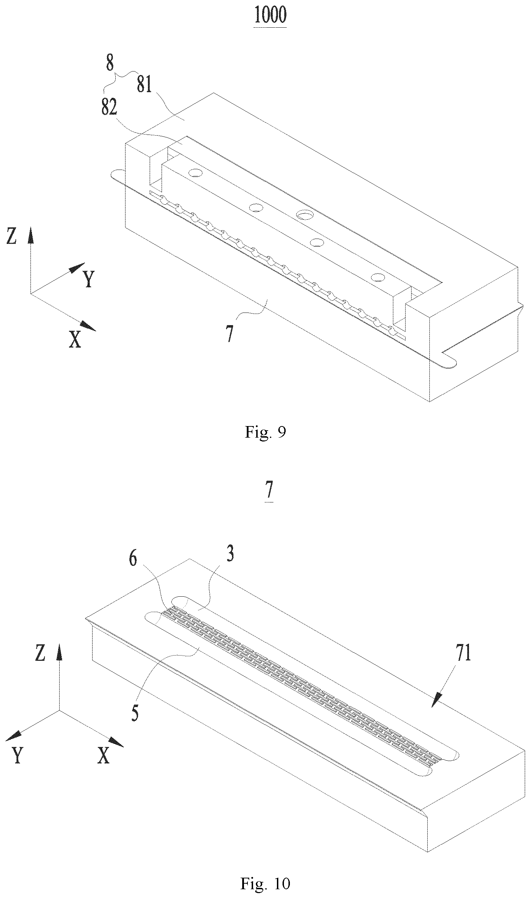

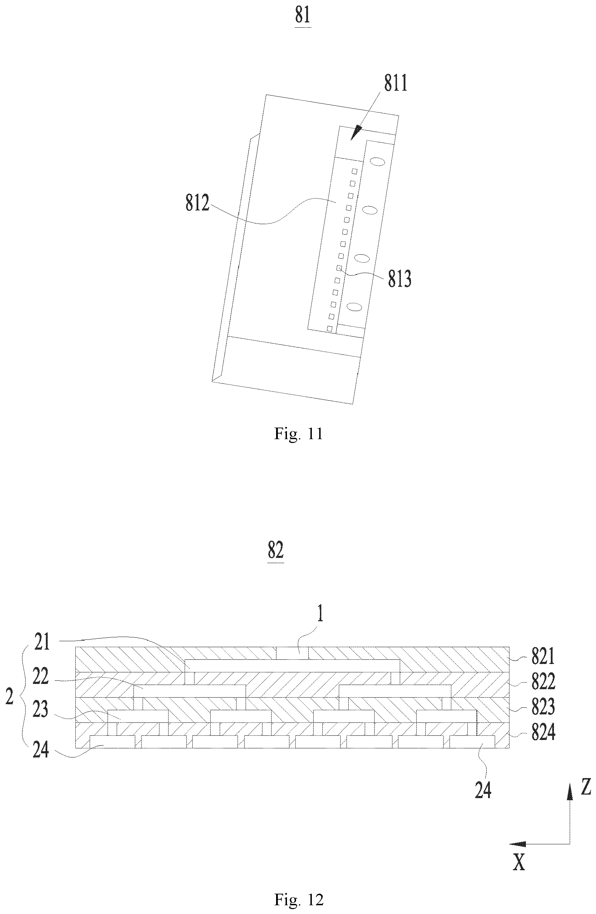

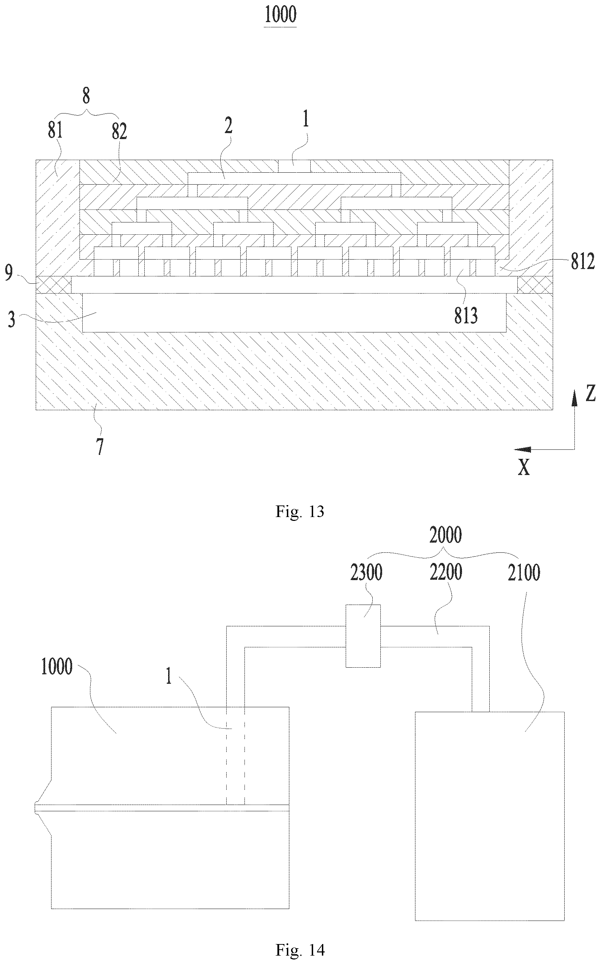

Fig. 9 shows a structural schematic view of a coating die according to some other embodiments of the present application; Fig. 10 shows a structural schematic view of a first die shown in Fig. 9; Fig. 11 shows a structural schematic view of a second main body of a second die shown in Fig. 9; Fig. 12 shows a cross-sectional structural schematic view of a second flow-rectifying block shown in Fig. 9; Fig. 13 shows a cross-sectional schematic view of the coating die shown in Fig. 9.

As shown in Fig. 9 to Fig. 13, in some embodiments, the first die 7 includes a first surface 71 facing the second die 8, and the first confluence chamber 3 is recessed from the first surface 71 in a direction away from the second die 8. The distributary channel 2 and the feed inlet 1 are provided in the second die 8.

In some embodiments, the first die 7 further includes the second confluence chamber 5 and the turbulent channel 6. In the second direction Y, the turbulent channel 6 is located between the first confluence chamber 3 and the second confluence chamber 5, and communicates the first confluence chamber 3 with the second confluence chamber 5.

In some embodiments, the first confluence chamber 3 and the distributary channel 2 are provided in the third direction Z. In this embodiment, the total size of the first confluence chamber 3 and the distributary channel 2 in the second direction Y can be reduced, so as to reduce the space occupied by the coating die 1000.

In some embodiments, the second die 8 includes a second main body 81 and a second flow-rectifying block 82, the second main body 81 is provided with a mounting hole 811, and the second flow-rectifying block 82 is inserted into the mounting hole 811 and exposed to an outside of the second main body 81. The distributary channel 2 and the feed inlet 1 are provided in the second flow-rectifying block 82. The discharge outlet 4 is provided between the first die 7 and the second main body 81.

The mounting hole 811 may be a through hole or a blind hole.

In this embodiment, the second die 8 may be equipped with the plurality of second flow-rectifying blocks 82, which are provided with the distributary channels 2 with different sizes. When the coating demand changes, the second flow-rectifying block 82 can be replaced directly without adjusting other structures of the second die 8, which can improve the applicability of the coating die 1000. In the process of replacing the second flow-rectifying block 82, the second flow-rectifying block 82 can be disassembled or assembled from the outside to the second main body 81 without separating the first die 7 from the second main body 81, which can improve the replacement efficiency of the second flow-rectifying block 82.

In some embodiments, the second flow-rectifying block 82 includes a first plate body 821 and a second plate body 822 stacked from an outside to an inside. The feed inlet 1 is provided in the first plate body 821, and the first flow channel 21 is recessed from a surface of the first plate body 821 facing the second plate body 822. The plurality of second flow channels 22 are provided in the second plate body 822.

The first plate body 821 only needs to be provided with the feed inlet 1 and the first flow channel 21, and the second plate body 822 only needs to be provided with the second flow channel 22, so that the difficulty of forming the first plate body 821 and the second plate body 822 can be reduced. By stacking the first plate body 821 and second plate body 822, the communication between the first flow channel 21 and the second flow channel 22 can be achieved, so as to simplify the forming process of the second flow-rectifying block 82.

In some embodiments, the second plate body 822 is detachably connected to the first plate body 821. Exemplarily, the second plate body 822 and the first plate body 821 can be connected by clamping, connection with fastening member or other detachable connecting means.

In this embodiment, when the coating demand changes, the second plate body 822 of the second flow-rectifying block 82 can be replaced to improve the applicability of the second flow-rectifying block 82.

Exemplarily, the second flow-rectifying block 82 is equipped with a plurality of second plate bodies 822, which are provided with the second flow channels 22 with different sizes (for example, the number of second flow channels 22 in different second plate bodies 822 are different). When the coating demand changes, the second plate body 822 of the second flow-rectifying block 82 can be replaced without changing the entire second flow-rectifying block 82.

In some embodiments, the first plate body 821 can be bonded to the second plate body 822.

In some embodiments, the second flow-rectifying block 82 further includes a third plate body 823, which is provided on a side of the second plate body 822 away from the first plate body 821. The third plate body 823 is provided with a plurality of third flow channels 23, and each of the second flow channels 22 is communicated with the first confluence chamber 3 through at least two third flow channels 23. The distributary channel 2 includes a plurality of third flow channels 23.

In this embodiment, the third plate body 823 can further disperse the slurry by providing the third flow channels 23 to improve the uniformity of the pressure of the slurry.

In some embodiments, the second flow-rectifying block 82 further includes a fourth plate body 824, which is located at a side of the third plate body 823 away from the second plate body 822. The fourth plate body 824 is provided with a plurality of fourth flow channels 24, and each of the third flow channels 23 is communicated with the first confluence chamber 3 through at least two fourth flow channels 24. The distributary channel 2 includes a plurality of fourth flow channels 24. In some embodiments, the second main body 81 is provided with a support wall 812, which is located between the first confluence chamber 3 and the mounting hole 811 and is configured to support the second flow-rectifying block 82. The support wall 812 is provided with a plurality of through holes 813, and each of the second flow channels 22 is communicated with the first confluence chamber 3 through at least two through holes 813.

In this embodiments, the support wall 812 can support the second flow-rectifying block 82, so as to facilitate the mounting of the second flow-rectifying block 82 and reduce the risk of excessive insertion of the second flow-rectifying block 82 into the second main body 81. The plurality of through-holes 813 can disperse the slurry to improve the uniformity of the pressure of the slurry.

In some embodiments, each of the fourth flow channels 24 is communicated with the first confluence chamber 3 through at least two through holes 813.

Fig. 14 shows a structural schematic view of a coating device of a battery electrode plate according to some embodiments of the present application.

As shown in Fig. 14, some embodiments of the present application further provide a coating device of a battery electrode plate, including the coating die 1000 according to any one of the embodiments as described above. The coating device provided by the embodiments of the present application can improve the consistency of the thickness of the electrode plate and enhance the performance of a battery.

In some embodiments, the coating device further includes a feed device 2000, which is connected to the feed inlet 1 of the coating die 1000 and used to provide the slurry.

In some embodiments, the feed device 2000 includes a slurry tank 2100, a pipeline 2200 and a slurry pump 2300. The slurry tank 2100 is used to store the slurry, the pipeline 2200 is used to connect the slurry tank 2100 with the feed inlet 1, and the slurry pump 2300 is arranged in the pipeline 2200. The slurry pump 2300 is used to transport the slurry from the slurry tank 2100 to the feed inlet 1 of the coating die 1000 through pipeline 2200.

Referring to Fig. 1 to Fig. 6, the embodiments of the present application provide the coating die 1000 including the first die 7, the second die 8 and the gasket 9. The first die 7 and the second die 8 are arranged opposite to each other in the third direction Z, and the gasket 9 is arranged between the first die 7 and the second die 8. The feed inlet 1 is provided in the second die 8 and is used for injecting the slurry. The first die 7 includes the first surface 71 facing the second die 8. The first die 7 is provided with two distributary channels 2, the first confluence chamber 3, the turbulent channel 6 and the second confluence chamber 5 which are recessed from the first surface 71. The distributary channel 2, the first confluence chamber 3, the turbulent channel 6 and second confluence chamber 5 are provided and communicated in the second direction Y in sequence. The second confluence chamber 5 is communicated with the discharge outlet 4.

Each of the distributary channels 2 includes the first flow channel 21, two second flow channels 22 and four third flow channels 23. The feed inlet 1 is communicated with two second flow channels 22 through the first flow channel 21, and each of the second flow channels 22 is communicated with the first confluence chamber 3 through two third flow channels 23.

Although the present application has been described with reference to the preferred embodiments, various modifications may be made thereto and equivalents may be substituted for parts thereof without departing from the scope of the present application. In particular, as long as there are no structural conflicts, the technical features mentioned in each of the embodiments can be combined in any way. The present application is not limited to the specific embodiments disclosed herein, but includes all technical solutions falling within the scope of the claims.

## Claims

1. A coating die for applying a slurry onto a base material, comprising:
a feed inlet for injecting the slurry;
a distributary channel, provided inside the coating die, the distributary channel comprising a first flow channel and a plurality of second flow channels, the first flow channel communicating the feed inlet with the plurality of second flow channels, and the plurality of second flow channels being arranged to be spaced from one another in a first direction;
a first confluence chamber, provided inside the coating die and communicated with the plurality of second flow channels to collect the slurry from the plurality of second flow channels; and
a discharge outlet, communicated with the first confluence chamber and configured to apply the slurry flowing through the distributary channel and the first confluence chamber onto the base material.

2. The coating die according to claim 1, wherein the distributary channel further comprises a plurality of third flow channels, and each of the second flow channels is communicated with the first confluence chamber through at least two third flow channels.

3. The coating die according to claim 2, wherein the plurality of third flow channels are evenly arranged to be spaced from one another in the first direction.

4. The coating die according to any one of claims 1 to 3, comprising a plurality of distributary channels, which are arranged in the first direction.

5. The coating die according to claim 4, comprising a plurality of feed inlets, which are communicated with the first flow channels of the distributary channels, respectively.

6. The coating die according to any one of claims 1 to 5, further comprising
a second confluence chamber, provided between the first confluence chamber and the discharge outlet, and communicated with the discharge outlet; and
a turbulent channel, communicating the first confluence chamber with the second confluence chamber, and being configured to disperse the slurry passing through the turbulent channel.

7. The coating die according to claim 6, wherein the first confluence chamber and second confluence chamber are arranged in a second direction, and the first direction intersects with the second direction;
the coating die comprises a plurality of blocking columns spaced from one another in the second direction, each of the blocking columns comprises a plurality of blocking blocks spaced from one another in the first direction, and the plurality of blocking blocks of two adjacent blocking columns are misaligned with each other in the first direction; and
the turbulent channel comprises a plurality of gaps formed between the plurality of blocking blocks of the plurality of blocking columns.

8. The coating die according to any one of claims 1 to 7, comprising a first die, a second die and a gasket, wherein the first die and the second die are provided opposite to each other in a third direction, and the gasket is provided between the first die and the second die to form the discharge outlet between the first die and the second die; and
the feed inlet is provided in the first die or the second die.

9. The coating die according to claim 8, wherein the first die comprises a first surface facing the second die, and the distributary channel and the first confluence chamber are recessed from the first surface in a direction away from the second die; and
the gasket is attached to the first surface and covers at least a portion of the distributary channel.

10. The coating die according to claim 9, wherein a depth of the first confluence chamber is larger than a depth of the distributary channel, in the third direction.

11. The coating die according to claim 9 or 10, wherein the first die comprises a first main body and a first flow-rectifying block, a concave part is provided on a surface of the first main body facing the second die, and the first flow-rectifying block is mounted in the concave part; and
the distributary channel and first confluence chamber are provided in the first flow-rectifying block, and the discharge outlet is provided between the first main body and the second die.

12. The coating die according to claim 8, wherein the first die comprises a first surface facing the second die, and the first confluence chamber is recessed from the first surface in a direction away from the second die; and
the distributary channel and the feed inlet are provided in the second die.

13. The coating die according to claim 12, wherein the first confluence chamber and the distributary channel are arranged in the third direction.

14. The coating die according to claim 12 or 13, wherein the second die comprises a second main body and a second flow-rectifying block, the second main body is provided with a mounting hole, and the second flow-rectifying block is inserted into the mounting hole and exposed to an outside of the second main body;
the distributary channel and the feed inlet are provided in the second flow-rectifying block; and
the discharge outlet is provided between the first die and the second main body.

15. The coating die according to claim 14, wherein the second flow-rectifying block comprises a first plate body and a second plate body stacked from an outside to an inside;
the feed inlet is provided in the first plate body, and the first flow channel is recessed from a surface of the first plate body facing the second plate body; and
the plurality of second flow channels are provided in the second plate body.

16. The coating die according to claim 15, wherein the second plate body is detachably connected to the first plate body.

17. The coating die according to claim 15 or 16, wherein the second flow-rectifying block further comprises a third plate body, which is provided at a side of the second plate body away from the first plate body; and
the third plate body is provided with a plurality of third flow channels, and each of the second flow channels is communicated with the first confluence chamber through at least two third flow channels.

18. The coating die according to any one of claims 15 to 17, wherein the second main body is provided with a support wall, which is located between the first confluence chamber and the mounting hole and is configured to support the second flow-rectifying block; and
the support wall is provided with a plurality of through holes, and each of the second flow channels is communicated with the first confluence chamber through at least two through holes.

19. A coating device of a battery electrode plate, comprising the coating die according to any one of claims 1 to 18.
